(19) **Europäisches Patentamt**

**European Patent Office**

**Office européen des brevets**

(11) **EP 0 787 811 B1**

(12) **EUROPEAN PATENT SPECIFICATION**

(45) Date of publication and mention
of the grant of the patent:
**03.05.2000 Bulletin 2000/18**

(51) Int Cl.[7]: **C22C 21/00**, H01B 1/02

(21) Application number: **97100824.8**

(22) Date of filing: **20.01.1997**

(54) **High-strength heat-resistant aluminium alloy, conductive wire, overhead wire and method of preparing the aluminium alloy**

Hochfeste und wärmebeständige Aluminium-Legierung, leitfähiger Draht, Oberleitung und Verfahren zur Herstellung der Aluminium-Legierung

Alliage à base d'aluminium à haute résistance mécanique, fil conducteur, ligne aérienne et procédé de fabrication de l'alliage à base d'aluminium

| | |
|---|---|
| (84) Designated Contracting States:<br>**DE FR GB**<br><br>(30) Priority: **30.01.1996 JP 1421196**<br><br>(43) Date of publication of application:<br>**06.08.1997 Bulletin 1997/32**<br><br>(73) Proprietor: **SUMITOMO ELECTRIC INDUSTRIES, LTD.**<br>**Osaka-shi, Osaka (JP)**<br><br>(72) Inventors:<br> • **Miyazaki, Kenji, c/o Sumitomo Elec. Ind. Ltd.**<br> **Osaka-shi, Osaka (JP)**<br> • **Ikeda, Toshiya, c/o Sumitomo Elec. Ind. Ltd.**<br> **Osaka-shi, Osaka (JP)** | (74) Representative: **Grünecker, Kinkeldey, Stockmair & Schwanhäusser Anwaltssozietät**<br>**Maximilianstrasse 58**<br>**80538 München (DE)**<br><br>(56) References cited:<br>**EP-A- 0 254 698**   **US-A- 4 397 696**<br>**US-A- 4 402 763**<br><br> • PATENT ABSTRACTS OF JAPAN vol. 018, no. 490 (C-1249), 13 September 1994 & JP 06 158246 A (FURUKAWA ELECTRIC CO LTD:THE), 7 June 1994,<br> • PATENT ABSTRACTS OF JAPAN vol. 095, no. 005, 30 June 1995 & JP 07 054110 A (MITSUBISHI CABLE IND LTD), 28 February 1995,<br> • PATENT ABSTRACTS OF JAPAN vol. 095, no. 011, 26 December 1995 & JP 07 207392 A (NIPPON LIGHT METAL CO LTD;OTHERS: 01), 8 August 1995, |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

The present invention relates to an aluminum alloy and a method of preparing the same, and more particularly, it relates to an aluminum alloy having high tensile strength and conductivity with excellent heat resistance which is applied to a conductive wire formed by twisting aluminum alloy wires and electric aluminum wires, and a method of preparing the same.

Description of the Background Art

In general, a conductive wire (hereinafter referred to as ACSR) prepared by twisting wires of electric aluminum (hereinafter referred to as ECAl) having aluminum purity of at least 99.7 % around a steel wire and an aluminum conductive wire prepared by twisting ECAl wires around an aluminum alloy wire are known as conductive wires for power transportation.

High tension is applied to such an aluminum conductive wire, which is extended between steel towers. Energy loss in power transportation can be reduced as the conductivity of the conductive wire is increased. In the conductive wire, therefore, the strength and conductivity must be increased beyond constant levels. However, the strength and conductivity of the ECAl forming the aluminum conductive wire cannot be improved beyond the present level. In order to increase the strength and conductivity of the aluminum conductive wire, therefore, the strength and the conductivity of the aluminum alloy wire must be increased.

When a high current flows to the aluminum conductive wire by an accident such as a short circuit, the aluminum conductive wire generates a large quantity of heat. In an accident or the like, therefore, the temperature of the aluminum conductive wire may exceed 100°C. After cooling to the room temperature, therefore, the aluminum conductive wire must have strength of the same degree as that before the temperature rise, i.e., heat resistance. However, the heat resistance of the ECAl forming the aluminum conductive wire cannot be improved beyond the present level. In order to put the aluminum conductive wire into practice, therefore, the aluminum alloy wire must have high heat resistance.

As hereinabove described, the aluminum alloy which is applied to an aluminum conductive wire must have high strength, high heat resistance and high conductivity.

On the other hand, the aluminum conductive wire is generally extended between steel towers. Such extension of the aluminum conductive wire between steel towers results in slackness.

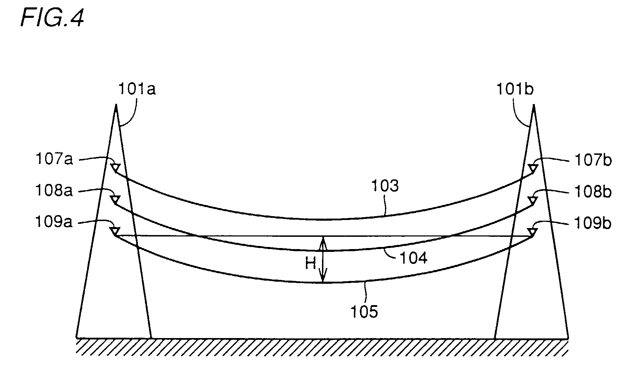

The slackness is now described. Fig. 4 is a model diagram showing steel towers 101a and 101b between which aluminum conductive wires 103, 104 and 105 are extended. Referring to Fig. 4, the steel tower 101a comprises support parts 107a, 180a and 109a, and the steel tower 101b comprises support parts 107b, 108b and 109b respectively. The aluminum conductive wires 103, 104 and 105 are extended between these steel wires 101a and 101b. The wire 103 is fixed to the steel towers 101a and 101b by the support parts 107a and 107b respectively. This also applies to the wires 104 and 105.

The distance (H in the figure) between a straight line connecting the support parts 109a and 109b with each other and the slackest part of the aluminum conductive wire 105 extended in the aforementioned manner is called slackness.

This slackness must not be increased even if the distance between the steel towers is increased. Therefore, the tension on each conductive wire must be increased. In order to increase the tension, the strength of an aluminum wire in each conductive wire must be increased.

Further, this strength must not be increased also when the temperature of the conductive wire is increased due to flow of a high current and thereafter cooled to the room temperature, as described above.

Namely, it is necessary to improve the strength of the aluminum alloy wire for increasing the heat resistance, when the distance between the steel towers is increased.

KTAl is known as such a high-strength heat-resistant aluminum alloy, while XTAl and ZTAl are known as heat-resistant aluminum alloys. Table 1 shows the characteristics of these aluminum alloys.

Table 1

| Material | Tensile Strength (kgf/mm$^2$) | Tensile Strength at 200°C (kgf/mm$^2$) | | Conductivity (% IACS) |
|---|---|---|---|---|
| | | After Holding for 1H | After Holding for 1000H | |
| XTAl | 17.8 | 17.5 | 17.5 | 58 |

Table 1   (continued)

| Material | Tensile Strength (kgf/mm$^2$) | Tensile Strength at 200°C (kgf/mm$^2$) | | Conductivity (% IACS) |
| --- | --- | --- | --- | --- |
| | | After Holding for 1H | After Holding for 1000H | |
| ZTAl | 17.8 | 17.5 | 17.5 | 60 |
| KTAl | 26.5 | 18.0 | 18.0 | 55 |

Referring to Table 1, the column "After Holding for 1 H" shows tensile strength values of samples which were held at a temperature of 200°C for 1 hour and thereafter cooled to the room temperature. On the other hand, the column "After Holding for 1000 H" shows tensile strength values of the samples which were held at the temperature of 200°C for 1000 hours and thereafter cooled to the room temperature.

Referring to Table 1, further, the conductivity is expressed in "%IACS". "X %IACS" indicates resistivity of 100/(58 x X) $\Omega$mm$^2$/m. This also applies to Tables 2, 4, 5 and 7 described later with reference to Examples.

As understood from Table 1, the KTAl can be regarded as an aluminum alloy having high strength and excellent heat resistance, in particular. This KTAl is an alloy containing 0.25 to 0.7 percent by weight of zirconium, 0.10 to 0.4 percent by weight of silicon, 0.10 to 1.0 percent by weight of iron and 0.10 to 0.40 percent by weight of copper with a rest consisting of aluminum and impurities, as described in Japanese Patent Laying-Open No. 63-293146 (1988), for example.

When such KTAl having high strength and high heat resistance is applied to a wire, it is possible to reduce the slackness of the conductive wire and increase the distance between steel towers.

In recent years, however, it is desired to further increase the distance between steel towers across a channel or the like. Thus, the tension for extending the conductive wire must be further increased, and even the strength of the KTAl may be insufficient. In this case, an aluminum alloy having higher strength than the KTAl is necessary.

Aluminum alloys of JIS nominal 5083H112, JIS nominal 6061T6 and JIS nominal 7075T6 are known as those having higher strength than the KTAl. However, these aluminum alloys have only low conductivity values of 29 %IACS, 43 %IACS and 33 %IACS respectively, and are unsuitable for conductive alloys requiring conductivity of at least 50 %IACS.

SUMMARY OF THE INVENTION

An object of the present invention is to provide an aluminum alloy, a conductive wire and an overhead wire having high strength, high resistance and high conductivity.

In terms of an alloy, the above object is achieved by the subject matter of claim 1. Preferred embodiments and further improvements are indicated in claims 4 and 5. The use of the inventive alloy is claimed in claims 2 and 3.

In terms of a method for manufacturing the inventive alloy, the above object is achieved by the subject matter of claim 6. A preferred embodiment is indicated in claim 7.

The high-strength heat-resistant aluminum alloy according to the present invention has tensile strength of at least 28 kgf/mm$^2$ and conductivity of at least 50 %IACS, and its tensile strength remains at a level of at least 90 % of the initial level after a heat history at a temperature of 180°C for 400 hours.

Due to the tensile strength of 28 kgf/mm$^2$, a conductive wire formed by such a high-strength heat-resistant aluminum wire can be extended with higher tension as compared with the prior art. Therefore, the slackness of the conductive wire can be reduced, and the distance between steel towers for supporting the conductive wire can be increased.

After the heat history at a temperature of 180°C for 400 hours, the tensile strength remains at a level of at least 90 % of the initial level. The heat history at the temperature of 180°C for 400 hours corresponds to that at a temperature of 150°C for 36 years. Therefore, the inventive high-strength heat-resistant aluminum alloy can withstand a long-term heat history when applied to a conductive wire, to enable long-term employment.

On the other hand, the conductivity of at least 50 %IACS indicates resistivity of not more than 1/29 $\Omega \times$mm$^2$/m. Therefore, energy loss resulting from heat generation in power transmission can be reduced.

The inventive high-strength heat-resistant aluminum alloy has tensile strength of at least 28 kgf/mm$^2$ and thermal conductivity of at least 200 W/m$\times$K, and its tensile strength remains at a level of at least 90 % of the initial level after a heat history at a temperature of 180°C for 400 hours. The thermal conductivity, which is in proportion to the conductivity, of at least 200 W/m$\times$K corresponds to conductivity of at least 50 %IACS.

Such a high-strength heat-resistant aluminum alloy can be applied to a member requiring high strength, high heat resistance and high thermal conductivity, such as an engine block, an engine head or a radiator serving as a member for a transportation apparatus or the like.

When the inventive high-strength heat-resistant aluminum alloy is applied to a member for a transportation apparatus, the transportation apparatus can be remarkably reduced in weight as compared with the conventional case of forming the member by an iron alloy.

The inventive high-strength heat-resistant aluminum alloy may contain 0.28 to 0.80 percent by weight of zirconium, 0.10 to 0.80 percent by weight of manganese and 0.10 to 0.40 percent by weight of copper.

The inventive high-strength heat-resistant aluminum alloy contains 0.16 to 0.30 percent by weight of silicon.

Further, the inventive high-strength heat-resistant aluminum alloy preferably contains 0.10 to 0.30 percent by weight of at least one element selected from a group consisting of vanadium, cobalt, chromium and molybdenum, in place of manganese.

In addition, the inventive high-strength heat-resistant aluminum alloy preferably contains 0.10 to 0.30 percent by weight of at least one element selected from the group consisting of vanadium, cobalt, chromium and molybdenum.

The actions of these elements are now described.

First, zirconium is described. Zirconium conceivably forms precipitates or crystallizing substances of $Al_3Zr$ in sizes of a certain range, to improve the heat resistance when dispersed in the aluminum alloy. The precipitates also include those grown by heat treatment from the crystallizing substances serving as nuclei. If the content of zirconium is less than 0.28 percent by weight, the precipitates or the crystallizing substances of $Al_3Zr$ cannot be ensured in sufficient quantities, and hence the heat resistance cannot be improved. If the zirconium content exceeds 0.8 percent by weight, on the other hand, $Al_3Zr$ crystallizes as a large mass in a cooling process at an ordinary casting speed, and is not dispersed in the aluminum alloy. Therefore, the heat resistance of the aluminum alloy is reduced. If the zirconium content exceeds 0.8 percent by weight, it is necessary to disperse the crystallizing substances of $Al_3Zr$ by a powder metallurgical technique such as atomization. When such a technique is employed, however, it is predicted that the preparation cost is increased. Therefore, the zirconium content is preferably in the range of 0.28 to 0.8 percent by weight.

If the zirconium content is not more than 0.50 percent by weight, the liquidus temperature of the aluminum alloy containing zirconium is not more than 810°C. General aluminum alloy casting equipment is designed to be capable of withstanding temperatures of up to 850°C. If the zirconium content is not more than 0.50 percent by weight, therefore, the inventive aluminum alloy can be prepared by general aluminum alloy casting equipment. Thus, the zirconium content is most preferably within the range of 0.28 to 0.50 percent by weight.

Copper is now described. Copper is added to the aluminum alloy, for increasing its tensile strength at the room temperature. If the content of copper is less than 0.1 percent by weight, however, the effect of increasing the tensile strength of the aluminum alloy at the room temperature is small. If the copper content exceeds 0.4 percent by weight, on the other hand, corrosion resistance and heat resistance are reduced although the tensile strength at the room temperature is increased. Therefore, the copper content is within the range of 0.10 to 0.40 percent by weight.

Manganese is now described. Manganese increases the tensile strength of the aluminum alloy at the room temperature similarly to copper, and greatly contributes to improvement of the heat resistance. As described above, copper increases the tensile strength of the aluminum alloy at the room temperature. If the copper content is increased, however, the heat resistance of the aluminum alloy is reduced. In order to compensate for this, the zirconium content may be increased. If the zirconium content is increased, however, a powder metallurgical technique such as atomization is required for the aforementioned reason. Thus, the preparation cost is increased and the aluminum alloy is hard to prepare. When manganese is added to the aluminum alloy, the heat resistance can be improved without increasing the zirconium content.

If the content of manganese is less than 0.1 percent by weight, however, the effect of improving the heat resistance is small. If the manganese content exceeds 0.8 percent by weight, on the other hand, the conductivity may be less than 50 %IACS. Therefore, the manganese content is preferably within the range of 0.10 to 0.80 percent by weight.

Chromium, vanadium, cobalt and molybdenum bring effects similar to that of manganese. However, the conductivity is remarkably reduced when these elements are added to the aluminum alloy, and hence the total sum of the contents of these elements is preferably within the range of 0.1 to 0.3 percent by weight.

Silicon is now described. Silicon forms nuclei in precipitation of $Al_3Zr$. If the aluminum alloy contains silicon in a dispersed state when heat treatment is performed thereon, precipitation of $Al_3Zr$ dispersively takes place with nuclei of silicon. Therefore, precipitates of $Al_3Zr$ are widely dispersed in the aluminum alloy, thereby improving the heat resistance of the aluminum alloy.

If the content of silicon is less than 0.16 percent by weight, however, this content cannot be regarded as sufficient for the aforementioned action. If the silicon content exceeds 0.3 percent by weight, on the other hand, the conductivity of the aluminum alloy may be less than 50 %IACS. Therefore, the silicon content is within the range of 0.16 to 0.30 percent by weight.

If the ratio of hot working is high as compared with that of cold working, the amount of precipitation of $Al_3Zr$ is also increased. If a large content of silicon is contained, the heat resistance of the aluminum alloy can be improved due to the aforementioned action. If the ratio of hot working is high, therefore, the silicon content is preferably increased in the range of 0.16 to 0.30 percent by weight.

The aluminum alloy according to the present invention can be applied to a conductive wire of a stranded wire structure. Further, this conductive wire can be applied to an overhead wire. A conductive wire or an overhead wire having such a structure can be extended with high tension due to the high strength and the high heat resistance, whereby the slackness can be reduced.

In a method of preparing a high-strength heat-resistant aluminum alloy according to the present invention, cast aluminum is preferably formed by casting a raw material containing 0.28 to 0.8 percent by weight of zirconium, 0.10 to 0.80 percent by weight of manganese and 0.10 to 0.40 percent by weight of copper with a rest consisting of aluminum at a temperature of at least $\{750 + 227 \times (Z - 0.28)\}°C$, where Z represents the zirconium content in weight percentage, and thereafter cooling the same at a cooling rate of at least 0.1°C/s. Then, the cast aluminum is hot-worked, thereby forming a primary aluminum alloy. Then, the primary aluminum alloy is heat-treated, thereby forming a secondary aluminum alloy. Then, the secondary aluminum alloy is cold-worked. This cold working step may be omitted. Alternatively, the cold working may be performed before heat-treating the primary aluminum wire.

The raw material further contains 0.16 to 0.30 percent by weight of silicon.

Further, the raw material preferably contains 0.10 to 0.30 percent by weight of at least one element selected from a group consisting of vanadium, chromium, molybdenum and cobalt in place of manganese.

In addition, the raw material preferably contains 0.10 to 0.30 percent by weight of at least one element selected from the group consisting of vanadium, chromium, molybdenum and cobalt.

The heat treatment is preferably performed in an atmosphere of a temperature of at least 320°C and not more than 390°C for 30 to 300 hours.

The aluminum alloy prepared in the aforementioned method may contain 0.28 to 0.80 percent by weight of zirconium, 0.10 to 0.80 percent by weight of manganese and 0.10 to 0.40 percent by weight of copper. Further, the aluminum alloy contains 0.16 to 0.30 percent by weight of silicon. In addition, the aluminum alloy contains 0.1 to 0.3 percent by weight of at least one element selected from the group consisting of vanadium, cobalt, chromium and molybdenum in place of or in addition to manganese. Thus, an aluminum alloy having high strength and high conductivity with excellent heat resistance can be provided.

The casting temperature is at least $\{750 + 227 \times (Z - 0.28)\}°C$, where Z represents the zirconium content in weight percentage. This formula is extremely close to that showing the liquidus of zirconium. If casting is started at a temperature lower than that expressed by this formula, therefore, $Al_3Zr$ crystallizes before the casting to reduce the amount of zirconium in the molten metal, and hence the heat resistance of the aluminum alloy is deteriorated.

The cooling rate after the casting is at least 0.1°C/s. Thus, it is possible to suppress remarkable growth of crystallizing substances ($Al_3Zr$), thereby improving the heat resistance of the aluminum alloy.

The heat treatment is preferably performed in an atmosphere of a temperature of at least 320°C and not more than 390°C for 30 to 300 hours.

In such ranges of the temperature and the time, $Al_3Zr$ precipitates in sizes capable of most effectively attaining heat resistance, including the case of precipitating from crystallizing substances serving as nuclei. Thus, the heat resistance of the aluminum alloy can be improved.

The foregoing and other objects, features, aspects and advantages of the present invention will become more apparent from the following detailed description of the present invention when taken in conjunction with the accompanying drawings.

BRIEF DESCRIPTION OF THE DRAWINGS

Figs. 1A and 1B are model sectional views showing conductive wires employing a high-strength heat-resistant aluminum alloy according to the present invention;

Fig. 2 is a model diagram of steel towers on which an overhead earth wire and overhead transmission lines consisting of the inventive aluminum alloy are mounted;

Fig. 3 is a model diagram of a trolley wire consisting of the inventive aluminum alloy; and

Fig. 4 is a model diagram showing conventional electric wires extended between steel towers.

DESCRIPTION OF THE PREFERRED EMBODIMENTS

Examples of a high-strength heat-resistant aluminum alloy according to the present invention are now described.

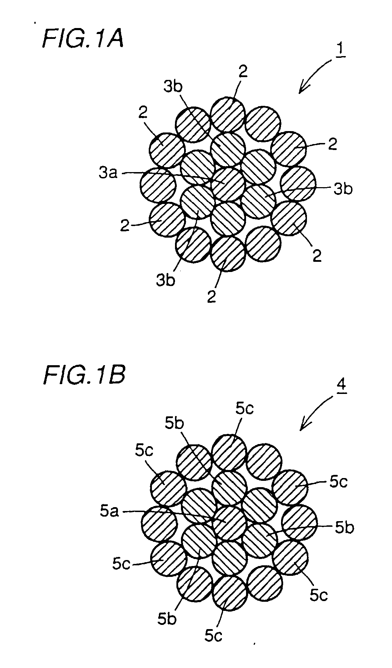

Referring to Fig. 1A, a conductive wire 1 comprises ECAl wires 2 and aluminum alloy wires 3a and 3b. The aluminum alloy wires 3a and 3b consist of the inventive high-strength heat-resistant aluminum alloy. The conductive wire 1 has a concentric stranded wire structure obtained by twisting the aluminum alloy wires 3b and the ECAI wires 2 around the aluminum alloy wire 3a in this order.

Referring to Fig. 1B, a conductive wire 4 comprises aluminum alloy wires 5a, 5b and 5c. The aluminum alloy wires 5a, 5b and 5c consist of the inventive high-strength heat-resistant aluminum alloy. The conductive wire 4 has a concentric stranded wire structure obtained by twisting the aluminum alloy wires 5b and 5c around the aluminum alloy wire 5a in this order.

The conductive wire 1 or 4 having the aforementioned structure comprises the wires consisting of the inventive high-strength heat-resistant aluminum alloy having tensile strength of at least 28 kgf/mm$^2$. Therefore, the conductive wire 1 or 4 has higher tensile strength as compared with a conventional conductive wire employing KTAI having tensile strength of 26.5 kgf/mm$^2$.

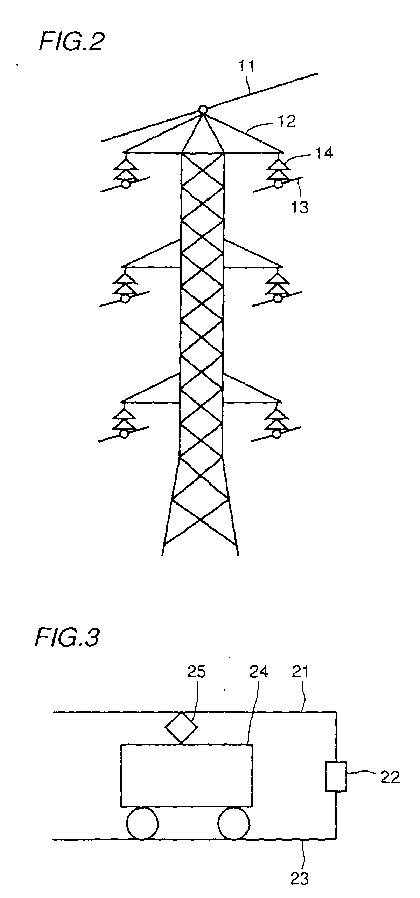

Referring to Fig. 2, an overhead earth wire 11 is mounted on a steel tower 12. Therefore, the overhead earth wire 11 and the steel tower 12 are electrically connected with each other. Overhead transmission lines 13 are mounted on the steel tower 12 through insulators 13. The steel tower 12 and the overhead transmission lines 13 are electrically insulated from each other by the insulators 13. The overhead earth wire 11 and the overhead transmission lines 13 are formed by conductive wires shown in Fig. 1A or 1B employing the inventive aluminum alloy.

Thus, an overhead earth wire and overhead transmission lines prepared from conductive wires employing the inventive aluminum alloy can be extended with high tension, for reducing slackness. Therefore, the distance between steel towers can be increased as compared with the prior art. Further, stranded or single-core wires (not shown) employing the inventive aluminum alloy can also be applied to overhead distribution lines.

Referring to Fig. 3, an electric car 24 is positioned on a rail 23. A trolley wire 21 is provided to be in contact with a pantagraph 25 of the electric car 24. The trolley wire 21 and the rail 23 are electrically connected to a dc or ac power source 22. The inventive aluminum alloy can be applied to the trolley wire 21.

(Example 1)

Raw materials for aluminum alloys having compositions shown in Table 2 were prepared. These raw materials were casted at temperatures shown in Table 2 and cooled at cooling rates shown in Table 2, thereby obtaining ingots of 200 mm in diameter and 300 mm in length respectively. These ingots were heated at a temperature of 450°C for 0.5 hours.

As to samples Nos. 1 to 5, these ingots were worked into round bars of 30 mm in diameter by extrusion. These round bars were heat treated under heat treatment conditions shown in Table 2, and cold-drawn into round bars of 12 mm in diameter.

As to samples Nos. 6 and 7, the ingots were worked into pipes of 15 mm in outer diameter and 12 mm in inner diameter by extrusion. These pipes were heat-treated under heat treatment conditions shown in Table 2, and thereafter cold-drawn into pipes of 8 mm in outer diameter and 6 mm in inner diameter. The inventive samples Nos. 1 to 7 were prepared in such manners.

As conventional samples, aluminum alloys of JIS nominal 3004-O and JIS nominal 5056-O and KTAI, containing 0.33 percent by weight of zirconium, 0.2 percent by weight of copper, 0.3 percent by weight of silicon and 0.2 percent by weight of iron with a rest of aluminum, were prepared. These aluminum alloys were worked into pipes of 8 mm in outer diameter and 6 mm in inner diameter, thereby preparing samples Nos. 8 to 10.

As to the samples Nos. 1 to 10, tensile strength values at the room temperature, tensile strength values after a heat history at a temperature of 180°C for 400 hours and conductivity values were investigated. Table 2 also shows the results.

Table 2

| Sample No. | | Composition (wt.%) | | | | Casting Temperature (℃) | Cooling Rate (℃/S) | Heat Treatment Condition (℃xH) | Tensile Strength at Room Temperature (kgf/mm²) | Tensile Strength after History (kgf/mm²) | Residual Strength (%) | Conductivity (%IACS) |
|---|---|---|---|---|---|---|---|---|---|---|---|---|
| | | Zr | Mn | Cu | Si | | | | | | | |
| Inventive Sample | 1 | 0.32 | 0.21 | 0.18 | 0.21 | 760 | 0.5−3 | 390x300 | 29.6 | 28.1 | 95.1 | 54.9 |
| | 2 | 0.36 | 0.23 | 0.21 | 0.18 | 770 | 0.5−3 | 370x300 | 30.1 | 28.1 | 93.2 | 54.7 |
| | 3 | 0.40 | 0.16 | 0.25 | 0.19 | 780 | 0.4−3 | 360x100 | 30.6 | 28.2 | 92.0 | 55.0 |
| | 4 | 0.45 | 0.59 | 0.30 | 0.25 | 790 | 0.2−1 | 330x30 | 32.8 | 30.1 | 91.8 | 51.3 |
| | 5 | 0.45 | 0.56 | 0.22 | 0.25 | 790 | 0.2−2 | 340x30 | 31.3 | 29.3 | 93.5 | 51.7 |
| | 6 | 0.37 | 0.24 | 0.20 | 0.19 | 775 | 0.3−3 | 350x70 | 30.3 | 28.1 | 92.6 | 54.7 |
| | 7 | 0.42 | 0.55 | 0.33 | 0.21 | 780 | 0.2−2 | 340x70 | 32.8 | 29.9 | 91.1 | 52.0 |
| Conventional Sample | 8 | JIS3004-0 | | | | — | — | — | 18.0 | 18.0 | 100.0 | 42.3 |
| | 9 | JIS5056-0 | | | | — | — | — | 29.5 | 29.4 | 99.7 | 29.2 |
| | 10 | KTAℓ | | | | — | — | — | 26.6 | 24.5 | 92.0 | 56.1 |

Referring to Table 2, "390 x 300" in the column of "Heat Treatment Condition" indicates heat treatment at a temperature of 390°C for 300 hours. The column of "Tensile Strength after History" shows the tensile strength values of the samples after a heat history at a temperature of 180°C for 400 hours. Each value of "Residual Strength" was calculated as follows:

(Formula 1)

"Residual Strength" = "Tensile Strength after

History"/"Tensile Strength at Room Temperature" x 100

The inventive samples Nos. 1 to 7 exhibited higher values of tensile strength and that after the heat history as compared with the conventional sample No. 8. Further, the inventive samples exhibited higher values of conductivity as compared with the conventional sample No. 9. In addition, the inventive samples exhibited higher values of tensile strength at the room temperature and that after the heat history as compared with the conventional sample No. 10.

Then, the pipes of 8 mm in outer diameter and 6 mm in inner diameter according to the samples Nos. 6 to 10 were dipped in oil which was maintained at a temperature of 200°C. The portions of the pipes dipped in the oil were 1 m in length. Thereafter water at a temperature of 25°C was fed from first ends to the inner portions of the pipes at a flow rate of 1.51 m/min. Temperatures (cold water temperatures) of the water outgoing from second ends of the pipes were measured. After the pipes of the samples Nos. 6 to 10 were dipped in the oil maintained at a temperature of 200°C for 1000 hours, the pipes were subjected to a tensile test. Table 3 shows the results.

Table 3

| Sample No. | | Cold Water Temperature (°C) | Tensile Strength after 1000H (kgf/mm$^2$) | Residual Strength (%) |
|---|---|---|---|---|
| Inventive Sample | 6 | 53.5 | 26.8 | 86.8 |
| | 7 | 52.9 | 27.1 | 82.6 |
| Conventional Sample | 8 | 50.9 | 18.0 | 100.0 |
| | 9 | 48.3 | 29.3 | 99.3 |
| | 10 | 55.0 | 19.9 | 74.8 |

Referring to Table 3, the column of "Tensile Strength after 1000 H" shows values of the tensile strength after dipping the pipes of the samples Nos. 6 to 10 in the oil maintained at a temperature of 200°C for 1000 hours. Further, each value of "Residual Strength" in Table 3 was calculated as follows:

(Formula 2)

"Residual Strength" = "Tensile Strength after 1000 H"

(Table 3)/"Tensile Strength at Room Temperature" (Table 2) x 100

As understood from the column of "Cold Water Temperature" in Table 3, the samples Nos. 10, 6, 7, 8 and 9 exhibited high thermal conductivity values in this order. The samples other than sample No. 10 have more than 80% of residual strength. Thus, it is understood that the inventive samples Nos. 6 and 7 are most excellent for a member requiring high thermal conductivity, high strength and high heat resistance.

(Example 2)

Raw materials for aluminum alloys containing zirconium, manganese, copper, silicon, chromium, vanadium, cobalt and molybdenum in contents (weight percentage) shown in Table 4 and 5 were prepared. These raw materials were casted in a mold of 30 mm in diameter and 300 mm in length at temperatures shown in Tables 4 and 5 and cooled at cooling rates of 0.5 to 0.9°C/s, thereby forming ingots.

These ingots were heated at a temperature of 410°C for 0.3 hours, and thereafter hot-swaged into wires of 12 mm in diameter.

These wires were cold-drawn into diameters of 4.1 mm, and heat-treated under heat treatment conditions shown in Tables 4 and 5. The wires were further cold-drawn into diameter of 0.8 mm, for investigating tensile strength values at the room temperature, tensile strength values after a heat history at a temperature of 180°C for 400 hours and conductivity values.

On the other hand, salt water was continuously sprayed onto wires for 1000 hours of equal weights not subjected to a heat history, and thereafter the wires were taken out from the salt water for investigating the weights of the corroded wires. Tables 4 and 5 also show the results.

Table 4

| Sample No. | | Composition (wt.%) | | | | | Casting Temperature (°C) | Heat Treatment Condition (°C×H) | Tensile Strength at Room Temperature (kgf/mm²) | Tensile Strength after History (kgf/mm²) | Residual Strength (%) | Conductivity (%IACS) | Corrosion Resistance |
|---|---|---|---|---|---|---|---|---|---|---|---|---|---|
| | | Zr | Mn | Cu | Si | Others | | | | | | | |
| Inventive Sample | 11 | 0.49 | 0.79 | 0.40 | 0.28 | — | 800 | 320×30 | 35.1 | 32.4 | 92.2 | 50.2 | ◯ |
| | 12 | 0.48 | 0.80 | 0.38 | 0.18 | — | 800 | 320×100 | 34.5 | 31.8 | 92.1 | 50.8 | ◯ |
| | 13 | 0.49 | 0.77 | 0.10 | 0.29 | — | 800 | 350×30 | 30.4 | 28.6 | 94.0 | 51.1 | ◯ |
| | 14 | 0.49 | 0.13 | 0.40 | 0.27 | — | 800 | 320×30 | 32.5 | 30.2 | 92.8 | 53.5 | ◯ |
| | 15 | 0.29 | 0.79 | 0.39 | 0.27 | — | 760 | 350×100 | 34.7 | 31.5 | 90.8 | 51.2 | ◯ |
| | 16 | 0.28 | 0.11 | 0.39 | 0.29 | — | 760 | 340×100 | 31.9 | 28.8 | 90.2 | 53.9 | ◯ |
| | 17 | 0.28 | 0.79 | 0.11 | 0.28 | — | 760 | 370×70 | 28.9 | 26.9 | 93.0 | 51.3 | ◎ |
| | 18 | 0.47 | 0.10 | 0.11 | 0.30 | — | 795 | 390×100 | 28.3 | 26.6 | 94.0 | 54.8 | ◎ |
| | 19 | 0.29 | 0.80 | 0.39 | 0.18 | — | 760 | 360×70 | 33.6 | 30.5 | 90.9 | 51.5 | ◯ |
| | 20 | 0.50 | 0.17 | 0.38 | 0.17 | — | 800 | 320×70 | 32.6 | 29.7 | 91.1 | 54.6 | ◯ |
| | 21 | 0.48 | 0.76 | 0.13 | 0.16 | — | 800 | 370×100 | 29.1 | 27.1 | 93.2 | 51.3 | ◯ |
| | 22 | 0.48 | 0.14 | 0.12 | 0.16 | — | 800 | 330×100 | 28.4 | 26.2 | 92.1 | 56.1 | ◎ |
| | 23 | 0.30 | 0.74 | 0.11 | 0.17 | — | 760 | 390×300 | 28.5 | 26.8 | 94.2 | 52.5 | ◎ |
| | 24 | 0.28 | 0.13 | 0.38 | 0.17 | — | 760 | 330×100 | 31.4 | 28.4 | 90.3 | 55.4 | ◯ |
| | 25 | 0.28 | 0.11 | 0.11 | 0.30 | — | 760 | 350×100 | 28.4 | 27.1 | 95.4 | 55.1 | ◎ |
| | 26 | 0.28 | 0.11 | 0.12 | 0.18 | — | 760 | 340×70 | 28.4 | 27.1 | 95.3 | 56.5 | ◎ |
| | 27 | 0.40 | 0.38 | 0.30 | 0.19 | — | 780 | 370×70 | 31.8 | 28.9 | 90.9 | 53.2 | ◯ |
| | 28 | 0.40 | 0.38 | 0.30 | 0.29 | — | 780 | 370×30 | 32.1 | 29.3 | 91.3 | 52.9 | ◯ |
| | 29 | 0.40 | — | 0.30 | 0.22 | Cr 0.27 | 780 | 360×70 | 30.7 | 28.1 | 91.4 | 50.2 | ◯ |
| | 30 | 0.39 | — | 0.29 | 0.21 | V 0.28 | 780 | 360×70 | 29.2 | 26.5 | 90.8 | 51.2 | ◯ |
| | 31 | 0.38 | — | 0.28 | 0.23 | Co 0.29 | 780 | 350×70 | 30.7 | 28.0 | 91.2 | 50.9 | ◯ |
| | 32 | 0.42 | — | 0.28 | 0.19 | Mo 0.19 | 780 | 360×70 | 29.0 | 26.4 | 90.9 | 50.3 | ◯ |
| | 33 | 0.40 | 0.12 | 0.19 | 0.22 | Cr 0.12 Co 0.11 | 780 | 370×70 | 30.9 | 28.2 | 91.4 | 50.3 | ◯ |

EP 0 787 811 B1

Table 5

| Sample No. | | Composition (wt.%) | | | | | Casting Temperature (℃) | Heat Treatment Condition (℃xH) | Tensile Strength at Room Temperature (kgf/mm²) | Tensile Strength after History (kgf/mm²) | Residual Strength (%) | Conductivity (%IACS) | Corrosion Resistance |
|---|---|---|---|---|---|---|---|---|---|---|---|---|---|
| | | Zr | Mn | Cu | Si | Others | | | | | | | |
| Comparative Sample | 34 | 0.22 | 0.07 | 0.10 | 0.20 | — | 740 | 310x700 | 24.9 | 23.4 | 94.2 | 57.3 | ◎ |
| | 35 | 0.50 | 0.05 | 0.09 | 0.21 | — | 800 | 410x300 | 26.0 | 24.5 | 94.4 | 56.4 | ◎ |
| | 36 | 0.28 | 0.59 | 0.11 | 0.16 | — | 760 | 410x100 | 26.5 | 25.3 | 95.5 | 52.2 | ◎ |
| | 37 | 0.55 | 0.60 | 0.05 | 0.18 | — | 820 | 420x100 | 27.2 | 26.1 | 96.1 | 53.3 | ◎ |
| | 38 | 0.28 | 0.05 | 0.45 | 0.11 | — | 760 | 320x10 | 33.2 | 28.5 | 86.0 | 56.4 | × |
| | 39 | 0.52 | 0.05 | 0.44 | 0.25 | — | 820 | 340x10 | 32.1 | 28.0 | 87.3 | 56.1 | × |
| | 40 | 0.25 | 0.85 | 0.42 | 0.12 | — | 750 | 400x70 | 33.2 | 30.1 | 90.8 | 48.8 | × |
| | 41 | 0.52 | 0.86 | 0.43 | 0.27 | — | 820 | 340x70 | 33.5 | 30.8 | 92.1 | 48.9 | × |
| | 42 | 0.83 | 0.34 | 0.18 | 0.20 | — | 870 | 390x100 | 32.2 | 29.9 | 93.0 | 49.7 | × |
| | 43 | 0.37 | 0.82 | 0.30 | 0.26 | — | 775 | 410x100 | 32.0 | 29.5 | 92.3 | 49.1 | ○ |
| | 44 | 0.34 | 0.52 | 0.47 | 0.12 | — | 765 | 410x300 | 33.8 | 29.4 | 87.0 | 53.2 | ○ |
| | 45 | 0.39 | 0.42 | 0.30 | 0.35 | — | 776 | 370x10 | 31.2 | 28.5 | 91.5 | 49.8 | ○ |
| | 46 | 0.40 | — | 0.31 | 0.25 | Cr 0.33 | 780 | 370x70 | 31.2 | 28.7 | 91.9 | 48.2 | ○ |
| | 47 | 0.39 | — | 0.31 | 0.26 | Cr 0.07 | 777 | 370x100 | 30.2 | 26.2 | 86.7 | 51.3 | ○ |
| | 48 | 0.41 | — | 0.31 | 0.24 | V  0.35 | 780 | 360x100 | 29.9 | 27.1 | 90.6 | 49.2 | ○ |
| | 49 | 0.38 | — | 0.31 | 0.26 | V  0.06 | 775 | 360x100 | 29.3 | 25.5 | 87.0 | 52.0 | ○ |
| | 50 | 0.40 | — | 0.30 | 0.25 | Co 0.34 | 780 | 370x70 | 31.2 | 28.5 | 91.4 | 48.6 | ○ |
| | 51 | 0.39 | — | 0.30 | 0.24 | Co 0.08 | 775 | 370x70 | 30.5 | 26.6 | 87.2 | 52.1 | ○ |
| | 52 | 0.42 | — | 0.31 | 0.25 | Mo 0.33 | 785 | 370x70 | 31.5 | 28.7 | 91.0 | 48.7 | ○ |
| | 53 | 0.41 | — | 0.31 | 0.25 | Mo 0.06 | 780 | 370x70 | 30.1 | 26.5 | 88.0 | 52.3 | ○ |
| | 54 | | | | | | — | — | 26.5 | 24.4 | 91.9 | 56.2 | Reference |

EP 0 787 811 B1

Referring to Tables 4 and 5, samples Nos. 11 to 33 have compositions, casting temperatures and heat treatment conditions within the inventive ranges, while samples Nos. 34 to 53 have compositions, casting temperatures or heat treatment conditions out of the inventive ranges. The material for a sample No. 54 is identical to that for the sample No. 10 (KTAI). Each value of "Residual Strength" was calculated by the formula 1. In the column of "Corrosion Resistance", the weight of the sample No. 54 (KTAI) after corrosion was regarded as a reference value, to indicate weights after corrosion in the range of 95 to 105 % of the reference value by ○, those exceeding 105 % of the reference value with excellent corrosion resistance by ◎ and those less than 95 % of the reference value with inferior corrosion resistance by x respectively.

As shown in Tables 4 and 5, the samples Nos. 11 to 33 of the inventive high-strength heat-resistant aluminum alloy exhibited higher values of tensile strength at the room temperature and that after the heat history as compared with KTAI (sample No. 54). On the other hand, the comparative samples Nos. 34 to 53 exhibited smaller values of tensile strength at the room temperature, that strength after the heat history and/or conductivity due to the aforementioned reasons, and included those inferior in corrosion resistance.

(Example 3)

Raw materials of the same compositions as the samples Nos. 11 to 33 shown in Table 4 were prepared. These raw materials were casted in a mold at various temperatures. When the casting temperature was less than $\{750 + 227 \times (Z - 0.28)\}°C$, zirconium contained in the molten metal crystallized as $Al_3Zr$ when a crucible was thermostated. Z represents the zirconium content in weight percentage. In order to avoid this crystallization, it was necessary to increase the casting temperature beyond the temperature expressed in the above formula.

After the raw materials were casted at casting temperatures shown in Table 6, ingots of 30 mm in diameter and 200 mm in length were formed at various cooling rates of 0.05 to 2.0°C/s. These ingots were worked similarly to Example 2, thereby obtaining wires of 4.1 mm in diameter.

These wires of samples Nos. 55, 56, ... were heat treated under the same heat treatment conditions as the samples Nos. 11, 12, ..., for thereafter investigating values of tensile strength at the room temperature, tensile strength after a heat history at a temperature of 180°C for 400 hours, and conductivity. Table 6 also shows the results.

Table 6

| Sample No. | Composition (wt.%) | | | | | Casting Temperature (°C) | Cooling Rate (°C/S) | | | |
|---|---|---|---|---|---|---|---|---|---|---|
| | Zr | Mn | Cu | Si | Others | | 0.05 - 0.1 | 0.1 - 0.5 | 0.5 - 1.0 | 1.0 - 2.0 |
| 55 | 0.49 | 0.79 | 0.40 | 0.28 | — | 800 | ● | ○ | | ○ |
| 56 | 0.48 | 0.80 | 0.38 | 0.18 | — | 796 | ● | ○ | ○ | ○ |
| 57 | 0.49 | 0.77 | 0.10 | 0.29 | — | 800 | ● | ○ | ○ | ○ |
| 58 | 0.49 | 0.13 | 0.40 | 0.27 | — | 800 | × | ○ | ○ | ○ |
| 59 | 0.29 | 0.79 | 0.39 | 0.27 | — | 755 | × | ○ | ○ | ○ |
| 60 | 0.28 | 0.11 | 0.39 | 0.29 | — | 750 | × | ○ | ○ | ○ |
| 61 | 0.28 | 0.79 | 0.11 | 0.28 | — | 750 | × | ● | ○ | ○ |
| 62 | 0.47 | 0.10 | 0.11 | 0.30 | — | 795 | ● | ○ | ○ | ○ |
| 63 | 0.29 | 0.80 | 0.39 | 0.18 | — | 755 | ● | ● | ○ | ○ |
| 64 | 0.50 | 0.17 | 0.38 | 0.17 | — | 800 | × | ○ | ○ | ○ |
| 65 | 0.48 | 0.76 | 0.13 | 0.16 | — | 797 | ● | ○ | ○ | ○ |
| 66 | 0.48 | 0.14 | 0.12 | 0.16 | — | 797 | ● | ● | ○ | ○ |
| 67 | 0.30 | 0.74 | 0.11 | 0.17 | — | 758 | ● | ● | ○ | ○ |
| 68 | 0.28 | 0.13 | 0.38 | 0.17 | — | 751 | × | ● | ○ | ○ |
| 69 | 0.28 | 0.11 | 0.11 | 0.30 | — | 751 | × | ● | ○ | ○ |
| 70 | 0.28 | 0.11 | 0.12 | 0.18 | — | 750 | × | ● | ○ | ○ |
| 71 | 0.40 | 0.38 | 0.30 | 0.19 | — | 780 | × | ● | ○ | ○ |
| 72 | 0.40 | 0.38 | 0.30 | 0.29 | — | 780 | × | ● | ○ | ○ |
| 73 | 0.40 | — | 0.30 | 0.22 | Cr 0.27 | 780 | × | ○ | ○ | ○ |
| 74 | 0.39 | — | 0.29 | 0.21 | V 0.28 | 780 | × | ● | ○ | ○ |
| 75 | 0.38 | — | 0.28 | 0.23 | Co 0.29 | 780 | × | ● | ○ | ○ |
| 76 | 0.42 | — | 0.28 | 0.19 | Mo 0.19 | 780 | × | ● | ○ | ○ |
| 77 | 0.40 | 0.12 | 0.19 | 0.22 | Cr 0.12 Co 0.11 | 780 | × | ● | ○ | ○ |

Referring to Table 6, marks ○ show samples having higher values of tensile strength at the room temperature than those having the same compositions shown in Table 4, with residual strength values of at least 90 %. Marks ● show samples having values of tensile strength at the room temperature of at least 28 kgf/mm$^2$ and not more than ○ with residual strength values of at least 90 %. Marks x show samples having values of tensile strength at the room temperature of less than 28 kgf/mm$^2$ or residual strength values of not more than 90 %.

It is understood from Table 6 that the tensile strength at the room temperature and the residual strength exceed 28 kgf/mm$^2$ and 90 % respectively if the cooling rate is at least 0.1°C/s. All samples exhibited conductivity values of at least 50 %IACS, although these values are not shown in Table 6.

(Example 4)

The inventive aluminum alloy was prepared by a Properzi continuous casting/rolling method, as follows:

First, a raw material for an aluminum alloy having a zirconium content of 0.40 percent by weight, a manganese content of 0.46 percent by weight, a copper content of 0.30 percent by weight and a silicon content of 0.25 percent by weight was prepared. This raw material was casted in a mold at a temperature of 780°C, for forming a molten metal. This molten metal was cooled to form an ingot. The sectional area of this ingot was 3500 mm$^2$. This ingot was sampled to measure the dendrite arm spacing, thereby estimating the cooling rate. The cooling rate was in the range of 0.9 to 32°C/s.

This ingot was hot-rolled, for forming a wire of 4.0 mm in diameter. This wire was heat-treated at a temperature of 300°C for 80 hours. Thereafter this wire was cold-drawn into a diameter of 4.0 mm.

The composition of the wire prepared in the aforementioned manner was identical to that of the raw material. The tensile strength of the wire at the room temperature was 32.1 kgf/mm$^2$, and its conductivity was 51 %IACS. After a heat history at a temperature of 180°C for 400 hours, this wire exhibited tensile strength of 29.9 kgf/mm$^2$, with residual strength of 93 %.

Thus, the Properzi continuous casting/rolling method can be regarded as effective means for preparing the inventive high-strength heat-resistant aluminum alloy.

(Example 5)

19 wires of 4.0 mm in diameter prepared in Example 4 were twisted for preparing a stranded wire. On the other hand, 19 wires consisting of KTAl were twisted for preparing a stranded wire. As to these stranded wires, conductivity values, tensile strength values and steel tower distances at the same slackness were compared with each other. Table 7 shows the results.

Table 7

| | Stranded Wire Structure | Outer Diameter of Stranded Wire (mm) | Weight (kg/km) | Conductivity of Stranded Wire (%IACS) | Tensile Strength of Stranded Wire (kgf) | Steel Tower Spacing (m) |
|---|---|---|---|---|---|---|
| Inventive Sample | 19/4.0 mm | 20.0 | 654.5 | 51 | 6890 | 800 |
| Conventional Sample (KT-Aℓ) | 19/4.0 mm | 20.0 | 654.5 | 55 | 5220 | 700 |

Referring to Table 7, each value of "Steel Tower Spacing" was measured in a state of setting the maximum tension for extending the stranded wire between steel towers at 1/3.5 of the tensile strength of the stranded wire (safety factor: 3.5) so that the slackness was 29 m.

As shown in Table 7, the stranded wire employing the inventive aluminum alloy was equivalent in weight to and higher in stranded wire tensile strength than the stranded wire employing the KTAl alloy.

While the steel tower spacing for the stranded wire employing the KTAl alloy was 700 m, that for the stranded wire employing the inventive aluminum alloy was 800 m due to the high tensile strength of the stranded wire.

Thus, the stranded wire employing the inventive aluminum wire is applicable to an overhead wire extended between steel towers at a long spacing as compared with the conventional stranded wire.

(Example 6)

A wire (heat treated) of 10 mm in diameter prepared by the Properzi continuous casting/rolling method in Example 4 was drawn into a molded wire. A transmission line shown in Fig. 1A or 1B was prepared by twisting molded wires of ECAl around this molded wire serving as a central portion. Table 8 shows characteristics of this transmission line and ACSR (conductive wire prepared by twisting ECAl wires around a steel wire).

Table 8

|  | Stranded Wire Structure (mm$^2$) | Outer Diameter of Stranded Wire (mm) | Weight (kg/km) | Conductivity of Stranded Wire (%IACS) | Tensile Strength of Stranded Wire (kgf) | Slackness (m) |
|---|---|---|---|---|---|---|
| Inventive Sample | EC-Aluminum Sectional Area: 500 <br><br> Inventive Sectional Area: 370 | 35.3 | 2390 | 56.17 | 18790 | 21.1 |
| Conventional Sample (ACSR) | EC-Aluminum Sectional Area: 814.5 <br><br> Steel Sectional Area: 56.29 | 38.4 | 2700 | 56.12 | 18480 | 22.3 |

Referring to Table 8, "EC-Aluminum Sectional Area" indicates the sectional areas of the ECAl wires in the conductive wires. "Inventive Sectional Area" indicates the sectional area of the wire employing the inventive aluminum alloy in the conductive wire. "Steel Sectional Area" indicates the sectional area of the steel wires in the ACSR. Referring to Table 8, further, the column "Slackness" shows those in case of setting the maximum tension for extending the wires between the steel towers at 5 tf with steel tower spacings of 400 m . The inventive sample was equivalent in conductivity and tensile strength to the ACSR sample. On the other hand, the inventive sample was smaller in weight than the ACSR sample. Therefore, the inventive sample was smaller in slackness than the ACSR sample by 1.2 m.

Thus, when the weight is reduced without reducing the tensile strength of the stranded wire, the slackness is reduced with tension which is similar to that for the conventional one. Therefore, this conductive wire can be extended between steel towers at a long spacing. If the conductive wire is reduced in weight, further, the strength of the steel towers for supporting the same can be reduced, whereby the cost for the steel towers can be reduced.

Although the present invention has been described and illustrated in detail, it is clearly understood that the same is by way of illustration and example only and is not to be taken by way of limitation, the spirit and scope of the present invention being limited only by the terms of the appended claims.

**Claims**

1.   A high strength, heat resistant aluminium alloy having a tensile strength of at least 275 N/mm$^2$ (28 kg g/mm$^2$) and containing :

      0.28 - 0.80 wt % Zr
      0.10 - 0.40 wt % Cu
      0.16 - 0.30 wt % Si

    and either

      a) 0.10 - 0.30 wt % in total of at least one element being selected from the group consisting of V, Co, Cr and Mo
      or
      b) 0.10 - 0.80 wt % Mn
      and optionally
      0.10 - 0.30 wt % in total of at least one element being selected from the group consisting of V, Co, Cr and Mo

the balance being Al.

2. Use of the high-strength heat-resistant aluminum alloy as claimed in claim 1 as a conductive wire (1,4) comprising stranded wires (3a,3b;5a,5b,5c).

3. Use of the high-strength heat-resistant aluminum alloy according to claim 2 as an overhead wire (11, 13, 21) comprising stranded wires.

4. A high-strength heat-resistant aluminum alloy, according to claim 1, having a conductivity of at least 50% IACS, and said tensile strength remaining at a level of at least 90% of said initial level after a heat history at a temperature of 180°C for 400 hours.

5. A high-strength heat-resistant aluminum alloy, according to claim 1, having a thermal conductivity of at least 200 W/m x K and said tensile strength remaining at a level of at least 90% of said initial level after a heat history at a temperature of 180°C for 400 hours.

6. A method of preparing a high strength, heat resistant aluminium alloy having a tensile strength of at least 275 N/mm$^2$ (28 kg g/mm$^2$), comprising the steps of :

   - casting a raw material containing

     0.28 - 0.80 wt % Zr
     0.10 - 0.40 wt % Cu
     0.16 - 0.30 wt % Si

   and either

     a) 0.10 - 0.30 wt % in total of at least one element being selected from the group consisting of V, Co, Cr and Mo
     or
     b) 0.10 - 0.80 wt % Mn
     and optionally
     0.10 - 0.30 wt % in total of at least one element being selected from the group consisting of V, Co, Cr and Mo.

   the balance being Al,
   at a temperature of at least {750 + 227 x (Z - 0.28)}°C, where Z represents the content of zirconium in weight percentage, and thereafter cooling the same at a cooling rate of at least 0.1°C/sec., thereby forming cast aluminum;

   - hot-working said cast aluminum thereby forming a primary aluminum alloy;
   - heat-treating said primary aluminum alloy thereby forming a secondary aluminum alloy; and
   - cold-working said secondary aluminum alloy.

7. A method of preparing a high-strength heat-resistant aluminum alloy according to claim 6, wherein said heat treatment is performed in an atmosphere of a temperature of at least 320°C and not more than 390°C for 30 to 300 hours.

**Patentansprüche**

1. Hochfeste, wärmebeständige Aluminiumlegierung, die eine Zugfestigkeit von mindestens 275 N/mm$^2$ (28 kg/mm$^2$) aufweist und enthält:

     0,28 - 0,80 Gew.-% Zr
     0,10 - 0,40 Gew.-% Cu
     0,16 - 0,30 Gew.-% Si

   und entweder

     a) 0,10 - 0,30 Gew.-% insgesamt von zumindest einem Element, das aus der Gruppe ausgewählt ist, die aus V, Co, Cr und Mo besteht,

oder

b) 0,10 - 0,80 Gew.-% Mn

und wahlweise
0,10 - 0,30 Gew.-% insgesamt von zumindest einem Element, das aus der Gruppe ausgewählt ist, die aus V, Co, Cr und Mo besteht, wobei der Rest Al ist.

2. Verwendung der hochfesten, wärmebeständigen Aluminiumlegierung, wie sie in Anspruch 1 beansprucht ist, als leitender Draht (1, 4), der verseilte Drähte (3a, 3b; 5a, 5b, 5c) umfaßt.

3. Verwendung der hochfesten, wärmebeständigen Aluminiumlegierung, wie sie in Anspruch 2 beansprucht ist, als Freileitungsdraht (11, 13, 21), der verseilte Drähte umfaßt.

4. Verwendung der hochfesten, wärmebeständigen Aluminiumlegierung, wie sie in Anspruch 1 beansprucht ist, die eine Leitfähigkeit von zumindest 50% IACS aufweist, und deren Zugfestigkeit auf einem Wert von zumindest 90% des Anfangswerts nach einer Wärmebehandlung bei einer Temperatur von 180°C während 400 Stunden bleibt.

5. Verwendung der hochfesten, wärmebeständigen Aluminiumlegierung, wie sie in Anspruch 1 beansprucht ist, die eine Wärmeleitfähigkeit von zumindest 200 W/m x K aufweist, und deren Zugfestigkeit auf einen Wert von zumindest 90% des Anfangswerts nach einer Wärmebehandlung bei einer Temperatur 180°C während 400 Stunden bleibt.

6. Verfahren zur Herstelung einer hochfesten, wärmebeständigen Aluminiumlegierung, die eine Zugfestigkeit von mindestens 275 N/mm$^2$ (28 kg/mm$^2$) aufweist, mit den Schritten:
Gießen eines Rohmaterials, das enthält

0,28 - 0,80 Gew.-% Zr
0,10 - 0,40 Gew.-% Cu
0,16 - 0,30 Gew.-% Si

und entweder

a) 0,10 - 0,30 Gew.-% insgesamt von zumindest einem Element, das aus der Gruppe ausgewählt wird, die aus V, Co, Cr und Mo besteht,
oder

b) 0,10 - 0,80 Gew.-% Mn
und wahlweise
0,10 - 0,30 Gew.-% insgesamt von zumindest einem Element, das aus der Gruppe ausgewählt wird, die aus V, Co, Cr und Mo besteht, wobei der Rest Al ist,
bei einer Temperatur von zumindest {750 + 227 x (Z - 0,28)}°C, worin Z den Anteil an Zirkonium in Gewichtsprozenten darstellt, und woraufhin jenes bei einer Abkühlrate von zumindest 0,1°C/s abgekühlt wird, wodurch Gußaluminium gebildet wird;

- Heißverarbeiten des Gußaluminiums, wodurch eine erste Aluminiumlegierung gebildet wird;

- Wärmebehandeln der primären Aluminiumlegierung, wodurch eine zweite Aluminiumlegierung gebildet wird; und

- Kaltbearbeiten der sekundären Aluminiumlegierung.

7. Verfahren zur Herstelung einer hochfesten, wärmebeständigen Aluminiumlegierung, wie sie in Anspruch 6 beansprucht ist, wobei die Wärmebehandlung in einer Atmosphäre bei einer Temperatur von zumindest 320°C und nicht höher als 390°C während 30 bis 300 Stunden durchgeführt wird.

**Revendications**

1. Alliage d'aluminium résistant à la chaleur, de résistance élevée présentant une résistance à la traction d'au moins 275 N/mm$^2$ (28 kgf/mm$^2$) et contenant :

   0,28 - 0,80 % en poids de Zr
   0,10 - 0,40 % en poids de Cu
   0,16 - 0,30 % en poids de Si

   et soit

   a) 0,10 - 0,30 % en poids au total d'au moins un élément choisi parmi V, Co, Cr et Mo
   soit
   b) 0,10 - 0,80 % en poids de Mn

    et facultativement

   0,10 - 0,30 % en poids au total d'au moins un élément choisi parmi V, Co, Cr et M
   le reste étant Al.

2. Utilisation de l'alliage d'aluminium résistant à la chaleur, de résistance élevée selon la revendication 1 en tant que câble conducteur (1, 4) comprenant des câbles torsadés (3a, 3b ; 5a, 5b, 5c).

3. Utilisation de l'alliage d'aluminium résistant à la chaleur, de résistance élevée selon la revendication 2 en tant que câble aérien (11, 13, 21) comprenant des câbles torsadés.

4. Alliage d'aluminium résistant à la chaleur, de résistance élevée selon la revendication 1 présentant une conductivité d'au moins 50 % LACS et ladite résistance à la traction restant à un niveau d'au moins 90 % dudit niveau initial après un passé thermique à une température de 180°C pendant 400 h.

5. Alliage d'aluminium résistant à la chaleur, de résistance élevée selon la revendication 1 présentant une conductivité thermique d'au moins 200 W/m x K et ladite résistance à la traction restant à un niveau d'au moins 90 % dudit niveau initial après un passé thermique à une température de 180°C pendant 400 h.

6. Procédé de préparation d'un alliage d'aluminium résistant à la chaleur, de résistance élevée présentant une résistance à la traction d'au moins 275 N/mm$^2$ (28 kgf/mm$^2$) comprenant les étapes consistant :

   - à couler une matière première contenant

      0,28 - 0,80 % en poids de Zr
      0,10 - 0,40 % en poids de Cu
      0,16 - 0,30 % en poids de Si

      et soit

      a) 0,10 - 0,30 % en poids au total d'au moins un élément choisi parmi V, Co, Cr et Mo
      soit
      b) 0,10 - 0,80 % en poids de Mn

       et facultativement

      0,10 - 0,30 % en poids au total d'au moins un élément choisi parmi V, Co, Cr et Mo,
      le reste étant Al,

       à une température d'au moins {750 + 227 x (Z - 0,28)}°C, où Z représente la teneur en zirconium en pourcentage en poids et à refroidir après cela celui-ci à une vitesse de refroidissement d'au moins 0,1°C/s, formant par là de l'aluminium coulé ;
   - à usiner à chaud ledit aluminium coulé, formant par là un alliage d'aluminium primaire

- à traiter thermiquement ledit alliage d'aluminium primaire, formant par là un alliage d'aluminium secondaire ; et
- à usiner à froid ledit alliage d'aluminium secondaire.

7. Procédé de préparation d'un alliage d'aluminium résistant à la chaleur, de résistance élevée selon la revendication 6, dans lequel ledit traitement thermique est réalisé dans une atmosphère d'une température d'au moins 320°C et d'au plus 390°C pendant de 30 à 300 h.

*FIG.1A*

*FIG.1B*

FIG.2

FIG.3

FIG.4